# NEUE EUROPÄISCHE PATENTSCHRIFT

(11) **EP 3 347 275 B2**
(45) Veröffentlichungstag und Bekanntmachung des Hinweises auf die Entscheidung über den Einspruch: **18.06.2025**
(45) Hinweis auf die Patenterteilung: 11.03.2020
(21) Anmeldenummer: 16714878.2
(22) Anmeldetag: 06.04.2016
(51) Int. Cl.: B60Q 3/46, B64D 47/02, B64D 11/00

(54) **FLUCHTWEGMARKIERUNG FÜR FLUGZEUGE**
ESCAPE PATH MARKING FOR AIRCRAFT
MARQUAGE DU CHEMIN D'ÉVACUATION POUR AVIONS

(30) Priorität: 11.09.2015 DE 102015217406
(43) Veröffentlichungstag der Anmeldung: 18.07.2018
(73) Patentinhaber: Lufthansa Technik AG, 22335 Hamburg (DE)
(72) Erfinder: SUTTER, Wolfgang, 25469 Halstenbek (DE)
(74) Vertreter: Glawe, Delfs, Moll
(86) Internationale Anmeldenummer: PCT/EP2016/057463
(87) Internationale Veröffentlichungsnummer: WO 2017/041912

(56) Entgegenhaltungen:
- EP-A2- 1 458 221
- WO-A1-2007/039673
- DE-A1- 102011 014 701
- DE-A1- 102014 101 288
- GB-A- 2 448 424
- GB-A- 2 512 498

## Beschreibung

Die Erfindung betrifft Fluchtwegmarkierungen für Flugzeuge sowie eine Anordnung aus einer Fluchtwegmarkierung und einem Bodenbelag.

In Verkehrsflugzeugen ist der Einsatz eines fußbodennahen Fluchtwegmarkierungssystems zwingend gefordert, um Passagieren im Notfall bei Dunkelheit und Ausfall der Kabinenbeleuchtung den Weg zu den Notausgängen zu weisen.

Neben elektrisch betriebenen Systemen sind hierfür auch photolumineszente Systeme bekannt. Diese Systeme bestehen aus streifenförmigen Elementen, welche im normalen Betriebszustand des Flugzeugs Energie aus der Kabinenbeleuchtung speichern und diese bei Dunkelheit in Form vom sichtbaren Licht wieder abgeben.

Da die Fluchtwegmarkierungen nur für einen Notfall vorgesehen sind, besteht großes Interesse daran, dass die Markierungen im normalen Betriebszustand des Flugzeugs so wenig wie möglich auffallen. Neben dem Ziel einer ansprechenden Gestaltung des Innenraums einer Flugzeugkabine soll auch erreicht werden, die Notfallsysteme eines Flugzeuges grundsätzlich möglichst dezent auszugestalten, damit Passagiere mit Flugangst durch unmittelbar erkennbare Notfallsysteme nicht ständig an die Möglichkeit eines Notfalls erinnert werden.

Hierfür ist es, beispielsweise aus dem Dokument GB 2512498 A, bekannt, oberhalb einer Photoluminiszenzschicht, welche bei Tageslicht in der Regel weißlich oder gelblich wirkt, und unterhalb einer transparenten Schutzschicht zum Schutz der Photoluminiszenzschicht vor Beschädigung einen Farbfilter anzuordnen, der so ausgebildet ist, dass der einen Teil des auf den Film einfallenden Lichts in bestimmten Wellenlängenbereichen wenigstens teilweise absorbiert oder reflektiert, während er für die übrigen Wellenlängenbereiche durchlässig ist. Durch entsprechende Farbfilter kann bei den üblichen Beleuchtungssituationen in einer Flugzeugkabine in einem normalen Betriebszustand des Flugzeuges das Erscheinungsbild der Fluchtwegmarkierung an eine vorgegebene Farbgebung angepasst werden, während gleichzeitig ausreichend Licht zur Photoluminiszenzschicht gelangt, um deren photoluminiszenten Pigmente "aufzuladen". Bei Dunkelheit wird Licht von diesen Pigmenten durch den Farbfilter für die Passagiere sichtbar abgestrahlt werden. Um letzteres in ausreichendem Umfang zu gewährleisten, müssen die Farbfilter zumindest in für das Aufladen der photoluminiszenten Pigmente in der Photoluminiszenzschicht erforderlichen Wellenlängenbereich sowie im Wellenlängenbereich, in dem diese Pigmente Licht ausstrahlen, einen hohen Transmissionsgrad aufweisen. In der Folge lässt sich durch die Farbfilter ausschließlich eine helle Farbgebung der Fluchtwegmarkierungen in üblichen Beleuchtungssituationen einer Flugzeugkabine erreichen. Außerdem lassen sich durch entsprechende Farbfilter nur homogen gefärbte Oberflächen erreichen, die sich trotz Farbangleichung ggf. weiterhin von bspw. benachbart dazu angeordneten Bodenbelägen, wie gemusterten Teppichen, abheben.
Zur Verbesserung der Variabilität der Gestaltung von Fluchtwegmarkierungen wurde weiterhin untersucht, anstelle eines Farbfilters zwischen Photoluminiszenzschicht und Schutzschicht eine Lochfolie mit einer gitterähnlichen Struktur aus vom Material der Folie umgebenen Durchbrüchen vorzusehen. Die Folie kann dabei mit einem beliebigen Muster bedruckt werden. Gleichzeitig sind die Durchbrüche der Folie ausreichend, um das Aufladen und die Abgabe von Licht der darunterliegenden Photoluminiszenzschicht in für den Einsatz als Fluchtwegmarkierung ausreichendem Maße zu gewährleisten. Durch ausreichend kleine Durchbrüche und geringe Abstände benachbarter Durchbrüche kann weiterhin erreicht werden, dass das menschliche Auge die Struktur der Lochfolie in bei der Verwendung in Flugzeugen üblichen Abständen zwischen dem Auge des Betrachters und Fluchtwegmarkierung nicht mehr auflösen kann, wodurch die Lochfolie nicht mehr als solche wahrgenommen wird und sich Farbeindrücke aus der Mischung von der Farbe der Lochfolie und der Farbe der darunterliegenden Photoluminiszenzschicht - also häufig weiß bis gelb - ergeben. Durch geeignete Bedruckung der Lochfolie lassen sich so eine Vielzahl von Mustern verwirklichen, die bei den üblichen Beleuchtungssituationen in einer Flugzeugkabine in einem normalen Betriebszustand des Flugzeuges sichtbar sind, wobei gleichzeitig die Funktionalität als Fluchtwegmarkierung bei Dunkelheit gewährleistet bleibt. Eine Fluchtwegmarkierung mit einer solchen Lochfolie ist aus der WO 2007/039673 A1 bekannt.

Nachteilig an der beschriebenen Verwendung von Lochfolie ist, dass sich weiterhin nur eine vergleichsweise helle Farbgebung, insbesondere aber keine gedeckten Farben erreichen lassen.

Der Erfindung liegt die Aufgabe zugrunde, eine Fluchtwegmarkierung und eine Anordnung aus Fluchtwegmarkierung und Bodenbelag zu schaffen, bei der vorgenannte Nachteile nicht mehr oder nur noch im verminderten Umfang auftreten.

Gelöst wird diese Aufgabe durch eine Fluchtwegmarkierung gemäß dem Hauptanspruch, sowie eine Anordnung aus einer Fluchtwegmarkierung und einem Bodenbelag gemäß dem Anspruch 12. Vorteilhafte Weiterbildungen sind Gegenstand der abhängigen Ansprüche.

Demnach betrifft die Erfindung eine Fluchtwegmarkierung für Flugzeuge, umfassend ein im Dunkeln nachleuchtendes Leuchtelement, dessen abgestrahltes Licht an einer Außenseite der Fluchtwegmarkierung austritt, und ein zwischen dem Leuchtelement und der Außenseite der Fluchtwegmarkierung angeordnetes transparentes Schutzelement, wobei zwischen dem Leuchtelement und der Außenseite der Fluchtwegmarkierung ein flächiges Rasterelement vorgesehen ist, welches sich regelmäßig abwechselnde farbrein transparente und opaken Bereiche umfasst, wobei die opaken Bereiche des Rasterelementes derart eingefärbt sind, dass sich bei externer Beleuchtung gemäß dem wenigstens einen vorgegebenen Beleuchtungsszenario auf der Außenseite der Fluchtwegmarkierung an den opaken Bereichen des Rasterelementes ein vorgegebenes mehrfarbiges Muster ergibt, und wobei ein transparentes eingefärbtes Element derart ausgebildet und zwischen dem Leuchtelement und der Außenseite der Fluchtwegmarkierung angeordnet ist, dass sich bei externer Beleuchtung gemäß wenigstens einem vorgegebenen Beleuchtungsszenario auf der Außenseite der Fluchtwegmarkierung an den transparenten Bereichen des Rasterelementes ein vorgegebener erster Farbton ergibt, wobei der vorgegebene erste Farbton ein Farbton des vorgegebenen mehrfarbigen Musters ist.

Die Erfindung betrifft weiterhin eine Anordnung aus einer Fluchtwegmarkierung und einem benachbart zur Fluchtwegmarkierung angeordneten Bodenbelag, wobei die Fluchtwegmarkierung erfindungsgemäß ausgebildet und derart ausgestaltet ist, dass bei externer Beleuchtung der Anordnung gemäß wenigstens einem vorgegebenen Beleuchtungsszenario auf der Außenseite der Fluchtwegmarkierung ein an das Muster des Bodenbelags angepasstes Muster ergibt.

Zunächst werden einige in Zusammenhang mit der Erfindung verwendete Begriffe erläutert:
Mit "Farbton" ist die neben der Helligkeit und Farbsättigung vom Menschen als grundlegend empfundene Eigenschaft einer Farbe bezeichnet. Der Farbton ist u.a. in einem HSV-Farbraum als Farbwinkel darstellbar.
"Transparent" im Sinne dieser Erfindung ist ein Bereich oder ein Element, wenn es für sichtbares Licht einen Transmissionsgrad von über 0,7, vorzugsweise von über 0,9 aufweist. Bei Bereichen oder Elementen mit einer Filterwirkung für hindurchtretendes Licht bezieht sich die Anforderung an den Transmissionsgrad auf die Wellenlängenbereiche des Lichts, die durch den Bereich oder das Element nicht herausgefiltert werden.
Ein transparenter Bereich ist "farbrein", wenn durch den Bereich hindurchtretendes Licht im Hinblick auf seinen Farbton im Wesentlichen unverändert bleibt. Insbesondere Farbfilter oder eingefärbte transparente Bauteile sind nicht farbrein, während bspw. eine Fensterscheibe oder die Frontscheibe eines Autos im Allgemeinen farbrein ist.
Ein transparentes Bauteil ist "eingefärbt" oder "getönt", wenn der Grad seiner Transparenz für unterschiedliche Wellenlängen des Lichts unterschiedlich ist, womit sich für diejenigen Wellenlängenbereiche, in denen die Transparenz geringer ist, eine gewisse Filterwirkung einstellt. Entsprechend ist ein transparentes eingefärbtes Bauteil nicht farbrein.
Ein Bereich gilt als "opak" im Sinne der Erfindung, wenn die Opazität des Bereiches wenigstens 10, vorzugsweise wenigstens 50 beträgt.
Unter "externer Beleuchtung" wird im Zusammenhang mit der Erfindung eine Beleuchtung einer Fluchtwegemarkierung von außen mit einer Lichtquelle bezeichnet, bei der die von der Fluchtwegemarkierung reflektierte, an der Außenseite der Fluchtwegemarkierung austretende Lichtmenge wenigstens um das Doppelte, vorzugsweise um das Fünffache größer ist als die von dem nachleuchtenden Leuchtelement emittierte, an der Außenseite der Fluchtwegemarkierung austretende Lichtmenge. Eine entsprechende externe Beleuchtung ist u.a. erforderlich, um das Leuchtelement derart aufzuladen, dass es bei Wegfall der externen Beleuchtung auch tatsächlich wie gewünscht nachleuchtet.
Ein "Beleuchtungsszenario" beschreibt eine oder mehrere typische Beleuchtungssituationen, wie sie an letztendlichen Einsatzort der Fluchtwegmarkierung auftreten können. Bei Fluchtwegmarkierungen an Bord eines Flugzeugs können typische Beleuchtungsszenarien bspw. die Beleuchtung durch Sonnenlicht, welches durch die Kabinenfenster in die Kabine eintritt, oder die Beleuchtung durch die Kabinenbeleuchtung sein. Ist die Kabinenbeleuchtung zur Schaffung verschiedener Beleuchtungssituationen helligkeits- und/oder farbveränderlich, können diese verschiedenen Beleuchtungssituationen jeweils gesonderte Beleuchtungsszenarien darstellen.

Durch das erfindungsgemäß vorgesehene transparente eingefärbte Element sind die Möglichkeiten, welches Muster oder welche Farbe auf einer Fluchtwegmarkierung im extern beleuchteten Zustand abbildbar sind, deutlich gesteigert. Indem durch das eingefärbte Element ein von der Farbe des Leuchtelementes abweichender grundsätzlicher Farbton der Fluchtwegemarkierung erreicht wird, kann nämlich im Zusammenspiel mit dem Rasterelement eine gesteigerte Anzahl von letztendlich auf der Fluchtwegmarkierung sichtbaren Mustern oder Farben erreicht werden. Durch das transparente eingefärbte Element wird ein von der Farbe des Leuchtmittels abweichender "Grundton" der Fluchtwegmarkierung erreicht. Durch das Rasterelement kann basierend auf diesem Grundton das eigentliche Muster oder die letztendliche Farbe erzeugt werden. Anders als im Stand der Technik, in dem sich das letztendlich wahrgenommene Muster aus Farbeindrücken aus der Mischung der Farben einer Lochfolie und einer darunterliegenden weißen oder gelben Photoluminiszenzschicht ergeben, wird durch die Einfärbung erreicht, dass sich das bei externer Beleuchtung auf der Außenseite der Fluchtwegmarkierung sichtbare Muster oder Farbe aus Farbeindrücken der Mischung der Farbe(n) des Rasterelementes und dem Grundton ergibt. Indem der Grundton abweichend von der Farbe des Leuchtmittels (in der Regel weiß oder gelb) gewählt werden kann, ergeben sich stark verbesserte Gestaltungsmöglichkeiten für die Fluchtwegmarkierung im Hinblick auf die Farbgebung eines bei externer Beleuchtung an der Außenseite der Fluchtwegmarkierung sichtbaren Musters oder der Farbe.

Das transparente eingefärbte Element muss selbstverständlich derart ausgestaltet sein, dass die Funktionalität der Fluchtwegmarkierung erhalten bleibt. Insbesondere ist die Einfärbung also so auszugestalten, dass bei externer Beleuchtung, bspw. durch das Kabinenlicht, eine ausreichende Lichtmenge durch das Schutzelement, das transparente eingefärbte Element und die transparenten Bereiche des Rasterelementes zum Leuchtelement gelangt, um es ausreichend aufzuladen, damit das Leuchtelement bzw. die Fluchtwegmarkierung im Notfall ausreichend hell und ausdauernd leuchten. Das Leuchtelement kann dabei gemäß dem bekannten Stand der Technik aus photoluminiszentem Material sein. Die entsprechenden sicherheitstechnischen Randbedingungen stellen in der Regel zwar keine Beschränkung hinsichtlich des Farbtons der Einfärbung und des vorgegebenen ersten Farbtons dar, sie gestatten aufgrund des aus den Randbedingungen resultierenden erforderlichen Transmissionsgrads aber keinen auf der Außenseite der Fluchtwegmarkierung bei externer Beleuchtung gemäß einem vorgegebenen Beleuchtungsszenario an den transparenten Bereichen des Rasterelementes beliebig dunklen Farbeeindruck. Ein entsprechend dunkler Farbeindruck kann aber durch geeignete Ausgestaltung des Rasterelementes, insbesondere im Hinblick auf dessen farbliche Gestaltung, erzeugt werden.

Bei dem transparenten eingefärbten Element kann es sich um einen Farbfilm handeln, der zwischen Schutzelement und Leuchtelement angeordnet wird. Es ist aber besonders bevorzugt, wenn das Schutzelement zur Bildung des transparenten eingefärbten Elements selbst entsprechend eingefärbt ist. In diesem Fall wird das transparente eingefärbte Element also unmittelbar durch das Schutzelement gebildet, wodurch die Anzahl der Komponenten der erfindungsgemäßen Fluchtwegmarkierung reduziert werden kann.

Da erfindungsgemäß das auf der Außenseite der Fluchtwegmarkierung bei externer Beleuchtung gewünschte Muster mehrfarbig ist, ist erfindungsgemäß weiterhin vorgesehen, dass der vorgegebene erste Farbton ein Farbton des gewünschten Musters ist. Weiterhin ist es - sofern die sicherheitstechnischen Randbedingungen dies zulassen - bevorzugt, das transparente eingefärbte Element so zu gestalten, dass sich bei externer Beleuchtung gemäß wenigstens einem vorgegebenen Beleuchtungsszenario nicht nur ein vorgegebener erster Farbton, sondern auch eine vorgegebene Helligkeit und/oder Sättigung ergibt, die vorzugsweise derjenigen des Musters an der hellsten Stelle mit dem vorgegebenen ersten Farbton entspricht.

Es ist vorgesehen, dass die opaken Bereiche des Rasterelementes derart eingefärbt sind, dass sich bei externer Beleuchtung gemäß dem wenigstens einen vorgegebenen Beleuchtungsszenario auf der Außenseite der Fluchtwegmarkierung an den opaken Bereichen des Rasterelementes ein vorgegebenes mehrfarbiges Muster ergibt. Durch entsprechende Ausgestaltung des Rasterelementes kann das letztendlich gewünschte Muster realisiert werden. Ist das transparente eingefärbte Element zwischen Außenseite der Fluchtwegmarkierung und dem Rasterelement angeordnet, so muss bei der Ausgestaltung des Rasters berücksichtigt werden, dass dieses von außen nur durch das transparente eingefärbte Element zu sehen ist.

Vorzugsweise wechseln sich die transparenten und opaken Bereiche des Rasterelementes derart ab, dass benachbarte Bereiche aus einer Entfernung von wenigstens 90 cm von der Außenseite der Fluchtwegmarkierung bei einem Auflösungsvermögen von wenigstens 2,0 Bogenminuten, vorzugsweise von wenigstens 0,5 Bogenminuten, weiter vorzugsweise von wenigstens 0,3 Bogenminuten nicht mehr getrennt wahrgenommen werden können. Durch eine entsprechende Ausgestaltung des Rasterelementes kann sichergestellt werden, dass ein transparenter Bereich grundsätzlich zusammen mit wenigstens einem opaken Bereich des Rasterelementes wahrgenommen wird, womit auch die Farben dieser Bereiche gemischt wahrgenommen werden.

Es ist bevorzugt, wenn die opaken Bereiche des Rastelementes einen mittleren Durchmesser von 0,25 mm bis 2 mm, vorzugsweise 0,25 mm bis 1 mm aufweisen. Vorzugsweise beträgt der mittlere Abstand zweier benachbarter opaker Bereiche 0,3 mm bis 4 mm, weiter vorzugsweise 0,3 mm bis 2 mm.

Vorzugsweise weisen die transparenten Bereiche des Rastelementes einen mittleren Durchmesser von 0,25 mm bis 2 mm, vorzugsweise 0,25 mm bis 1 mm auf. Vorzugsweise beträgt der mittlere Abstand zweier benachbarter transparenter Bereiche 0,3 mm bis 4 mm, weiter vorzugsweise 0,3 mm bis 2 mm.

Es ist bevorzugt, wenn das Rasterelement zwischen der Außenseite der Fluchtwegmarkierung und dem Schutzelement angeordnet ist. Es kann dabei als Druckfarbe(n) in einem Druckverfahren, vorzugsweise in einem Digitaldruckverfahren, unmittelbar auf das Schutzelement aufgebracht sein. Insbesondere in diesem Fall ist über dem Rasterelement vorzugsweise ein Kratzschutzlack aufgetragen. Durch die entsprechende Anordnung des Rasterelementes können die Spiegelungen auf der Außenseite der Fluchtwegmarkierungen deutlich reduziert werden, wodurch sich der Gesamteindruck der Fluchtwegmarkierung deutlich verbessert, insbesondere bspw. im Vergleich zu einem benachbart zur Fluchtwegmarkierung angeordneten Teppich.

Die Dicke des aufgedruckten Rasterelements ist vorzugsweise kleiner als 100 µm, weiter vorzugsweise zwischen 20 und 30 µm. Die Dicke der Kratzschutzlackschicht ist vorzugsweise kleiner als 50 µm, weiter vorzugsweise zwischen 5 und 15 µm.

Die Druckfarbe(n) des Rasterelementes und/oder der Kratzschutzlack sind vorzugsweise UV-aushärtend. Sind beide UV-aushärtend, können sie gleichzeitig ausgehärtet werden. Die Druckfarbe(n) des Rasterelementes und/oder der Kratzschutzlack können acrylatgruppenhaltige Polymere umfassen oder aus solchen bestehen.

Die Anordnung des Rasterelements zwischen der Außenseite der Fluchtwegmarkierung und dem Schutzelement sowie die diesbezüglichen Weiterbildungen verdienen ggf. gesondert Schutz. Insbesondere kann eine entsprechende Anordnung auch vorgesehen werden, wenn kein transparentes eingefärbtes Element bzw. kein eingefärbtes Schutzelement vorgesehen ist. Die anderen hier genannten vorteilhaften Weiterbildungen - insbesondere des Rasterelementes - bleiben auch bei einer solchen Ausgestaltung selbstverständlich gültig.

Die transparenten Bereiche des Rasterelementes sind vorzugsweise Leerstellen. Das Rasterelement ähnelt in diesem Fall einem Gitter mit sich über die gesamte Dicke des Gitters erstreckende Spalten zwischen Stegen, welche die opaken Bereiche des Rasterelementes bilden.

Der Flächenanteil von opaken Bereichen des Rasterelementes liegt gegenüber dessen Gesamtfläche vorzugsweise zwischen 20% und 80%. Bei einem Flächenanteil in der unteren Region dieses Bereichs lassen sich auf der Außenseite der Fluchtwegmarkierung bei externer Beleuchtung sichtbare, wenn auch eher helle Muster erzeugen. In der oberen Region dieses Bereiches lassen sich auch dunklere Muster mit größeren Kontrasten erreichen, wobei die gewünschte Funktionalität als nachleuchtende Fluchtwegmarkierung weiterhin gewährleistet werden kann.

Die transparenten Bereiche des Rasterelementes sind vorzugweise als geometrisch regelmäßige Formen, wie bspw. Kreise oder Vielecke, insbesondere Sechsecke, ausgestaltet. Dadurch lässt sich die Herstellung des Rasterelementes deutlich vereinfachen.

Zur Erläuterung der erfindungsgemäßen Anordnung wird auf die vorstehenden Ausführungen verwiesen.

Die Erfindung wird nun anhand vorteilhafter Ausführungsformen unter Bezugnahme auf die beigefügten Zeichnungen beispielhaft beschrieben. Es zeigen:
- Figur 1:: eine schematische Darstellung eines ersten Ausführungsbeispiels einer erfindungsgemäßen Anordnung mit erfindungsgemäßer Fluchtwegmarkierung;
- Figur 2:: eine schematische Darstellung eines zweiten Ausführungsbeispiels einer erfindungsgemäßen Anordnung mit erfindungsgemäßer Fluchtwegmarkierung;
- Figur 3a-d:: Beispiele für die Ausgestaltung von Rasterelementen zur Verwendung in einer Anordnung gemäß Figuren 1 oder 2; und
- Figur 4:: ein weiteres Beispiel für die Ausgestaltung eines Rasterelementes zur Verwendung in einer Anordnung gemäß Figuren 1 oder 2.

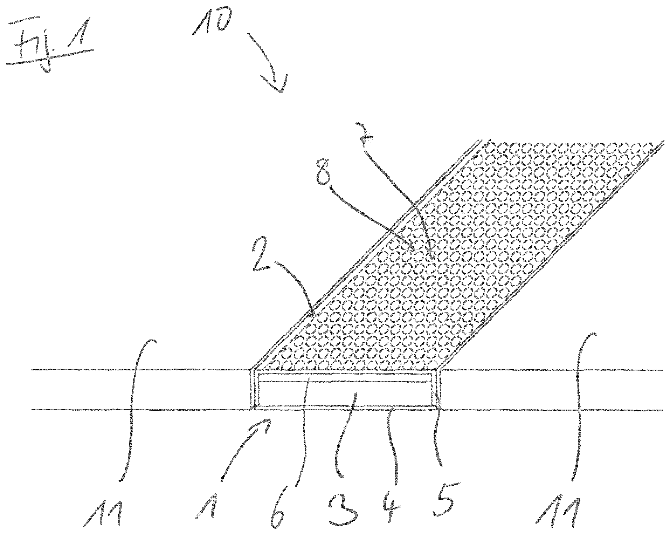

In Figur 1 ist ein erstes Ausführungsbeispiel einer erfindungsgemäßen Anordnung 10 aus einem Bodenbelag 11 und einer Fluchtwegmarkierung 1 schematisch dargestellt. Die Fluchtwegmarkierung 1 ist dabei so in den Bodenbelag 11 eingefügt, dass die Außenseite 2 der Fluchtwegmarkierung 1 plan mit der Oberseite des Bodenbelags 11 ist, womit sich eine insgesamt ebene Oberfläche der Anordnung 10 ergibt.

Die Fluchtwegmarkierung 1 umfasst ein im Dunkeln nachleuchtendes Leuchtelement 3 aus photoluminiszentem Material, dessen abgestrahltes Licht an der Außenseite 2 der Fluchtwegmarkierung 1 austritt. Das Leuchtelement 3 umgebend, und damit zwischen dem Leuchtelement 3 und der Außenseite 2 angeordnet ist ein transparentes Schutzelement 5, welches zusammen mit einem Bodenelement 4 das Leuchtelement 3 umschließt. Das Schutzelement 5 und das Bodenelement 4 können dabei unlösbar und abdichtend miteinander verbunden sein, sodass keine Flüssigkeit o.ä. von der Umgebung zu dem Leuchtelement 3 gelangen und dieses ggf. beschädigen kann. Es ist auch möglich, dass Bodenelement 4 einstückig mit dem Schutzelement 5 auszuführen.

Zwischen Leuchtelement 3 und der Außenseite 2 der Fluchtwegmarkierung 1 ist weiterhin ein Rasterelement 6 angeordnet. Das Rasterelement 6 ist bei dem Ausführungsbeispiel gemäß Figur 1 innerhalb des Schutzelementes 5 angeordnet und ist daher in weiten Teilen nur als Strichlinie dargestellt. Es umfasst sich regelmäßig abwechselnde farbrein transparente Bereiche 7 und opake Bereiche 8. Die transparenten Bereiche 7 sind dabei als Leerstellen ausgebildet. Das Rasterelement 6 kann bspw. eine Lochfolie sein. Das Rasterelement 6 kann alternativ bspw. auch ein im Digitaldruck aufgebrachtes Muster sein.

Das Schutzelement 5 und die opaken Bereiche 8 des Rasterelementes 6 sind derart eingefärbt, dass bei externer Beleuchtung der Anordnung 10 gemäß wenigstens einem vorgegebenen Beleuchtungsszenario auf der Außenseite 2 der Fluchtwegmarkierung 1 ein an das Muster des Bodenbelags 11 angepasstes Muster ergibt. Das Schutzelement 5 ist dabei derart eingefärbt, dass sich bei externer Beleuchtung gemäß dem vorgegebenen Beleuchtungsszenario auf der Außenseite 2 der Fluchtwegmarkierung 1 an den transparenten Bereichen 7 des Rasterelementes 6 ein vorgegebener erster Farbton ergibt, der einem Farbton des Musters des Bodenbelages 11 entspricht. Aufgrund seiner Einfärbung bildet das Schutzelement 5 somit gleichzeitig auch das erfindungsgemäß vorgesehene transparente eingefärbte Element, welches damit auch, wie erfindungsgemäße vorgesehen, zwischen Leuchtelement 3 und der Außenseite 2 der Fluchtwegmarkierung 1 angeordnet ist.

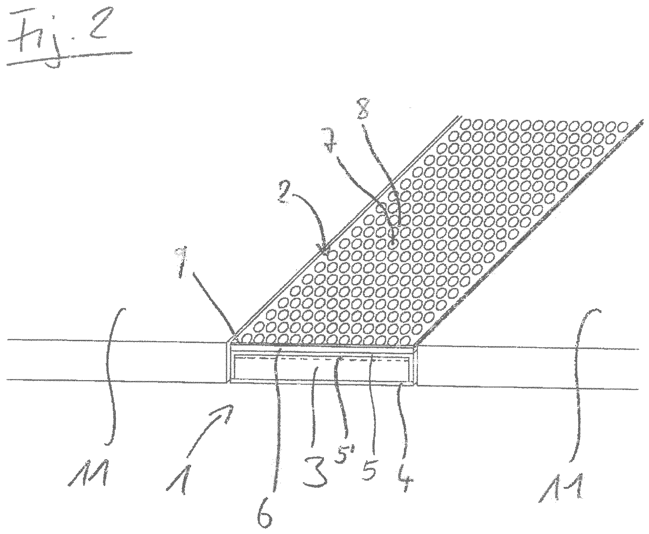

In Figur 2 ist ein zweites Ausführungsbeispiel einer erfindungsgemäßen Anordnung 10 aus einem Bodenbelag 11 und einer Fluchtwegmarkierung 1 schematisch dargestellt. Das zweite Ausführungsbeispiel ähnelt dabei in weiten Teilen dem ersten Ausführungsbeispiel gemäß Figur 1, weshalb auf die dementsprechenden Ausführungen verwiesen und im Folgen insbesondere auf die Unterscheide zwischen den beiden Ausführungsbeispielen eingegangen wird.

Bei dem zweiten Ausführungsbeispiel ist das Rasterelement 6 nicht mehr innerhalb sondern vielmehr außerhalb des Schutzelementes 5 angeordnet. Dazu ist das Rasterelement 6 in Form von Druckfarben in einem Digitaldruckverfahren unmittelbar auf das Schutzelement 5 aufgetragen und mit einer Schicht aus Kratzschutzlack 9 versehen. Sowohl die Druckfarben des Rasterelementes 6 als auch der Lack der Kratzschutzschicht 9 sind UVausgehärtet. Das Leuchtelement 3 ist weiterhin durch das Schutzelement 5 und das Bodenelement 4 geschützt.

Auch bei dem zweiten Ausführungsbeispiel sind das Schutzelement 4 und die opaken Bereiche 8 des Rasterelementes 6 derart eingefärbt, dass bei externer Beleuchtung der Anordnung 10 gemäß wenigstens einem vorgegebenen Beleuchtungsszenario auf der Außenseite 2 der Fluchtwegmarkierung 1 ein an das Muster des Bodenbelags 11 angepasstes Muster ergibt. Das Schutzelement 5 ist dabei derart eingefärbt, dass sich bei externer Beleuchtung gemäß dem vorgegebenen Beleuchtungsszenario auf der Außenseite 2 der Fluchtwegmarkierung 1 an den transparenten Bereichen 7 des Rasterelementes 6 ein vorgegebener erster Farbton ergibt, der einem Farbton des Musters des Bodenbelages 11 entspricht. Da aufgrund der Einfärbung das Schutzelement 5 bereits das transparente eingefärbte Element bildet, kann auf ein gesondertes entsprechendes Element verzichtet werden.

Sofern das Schutzelement 5 selbst nicht eingefärbt ist oder sein soll, kann alternativ dazu auch ein Farbfilm als transparentes eingefärbtes Element zwischen Leuchtelement 3 und Schutzelement 5 vorgesehen sein. Ein entsprechender Farbfilm ist durch die gestrichelte Linie 5' in Figur 2 angedeutet.

Die eigentliche Herstellung der Fluchtwegmarkierung 1 kann grundsätzlich beliebig erfolgen. Insbesondere kann auf die im Stand der Technik bekannten Verfahren zurückgegriffen werden. Bei einem dieser Verfahren werden sämtliche Elemente der Fluchtwegmarkierung 1 gesondert hergestellt und dann zusammengefügt. Bei einem anderen Verfahren wird das Leuchtelement 3 in einem gießähnlichen Vorgang in flüssigem Zustand unmittelbar in ein vorgefertigtes Schutzelement 5 eingebracht und verbindet sich beim Aushärten fest mit den Wänden des Schutzelementes 5. Sofern das Rasterelement 6 innerhalb des Schutzelementes 5 angeordnet werden soll, kann es vor dem angesprochenen gießähnlichen Vorgang in das Schutzelement 5 eingelegt oder in einem Druckverfahren auf die Innenseite des Schutzelementes 5 aufgebracht werden.

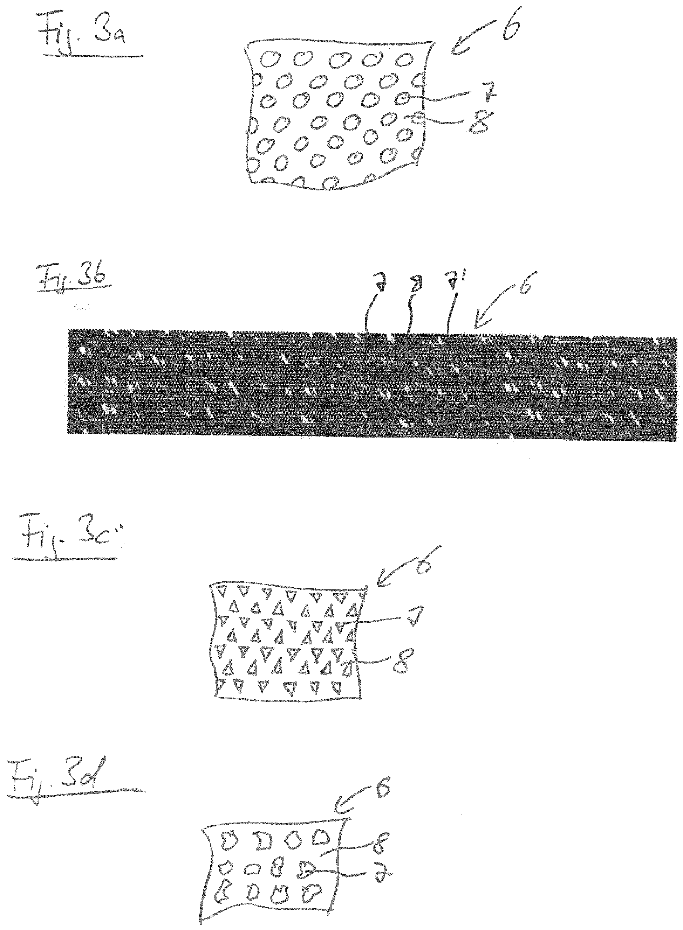

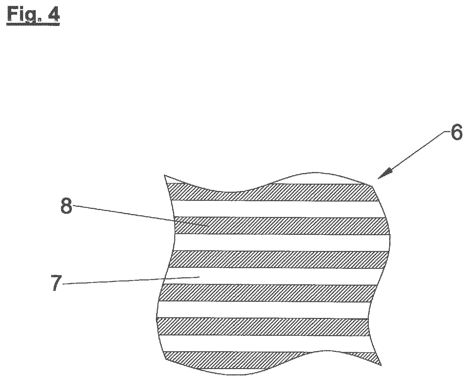

In Figuren 3a-d und 4 sind verschiedene Ausgestaltungsvarianten von Rasterelementen 6, wie sie bei den Anordnungen 10 bzw. in den Fluchtwegmarkierungen 1 gemäß Figuren 1 und 2 verwendet werden können, gezeigt. In den Figuren ist dabei jeweils ein Ausschnitt der jeweiligen Rasterelemente 6 gezeigt.

Das Rasterelement 6 gemäß Figur 3a umfasst regelmäßig angeordnete transparente und opake Bereiche 7, 8, wobei die transparenten Bereiche 7 kreisförmig ausgestaltet und derart angeordnet sind, dass der Abstand jeweils zweier benachbarter transparenter Bereiche 7 über das gesamte Raster hinweg im Wesentlichen gleich ist.

Das Rasterelement 6 gemäß Figur 3b basiert auf demjenigen gemäß Figur 3a, wobei jedoch an einigen Stellen das Raster durch vergrößerte Leerstellen 7' durchbrochen ist. Durch eine entsprechende Ausgestaltung des Rasters lassen sich besonders helle Stellen eines Musters erreichen.

Das Rasterelement 6 gemäß Figur 3c umfasst ebenfalls regelmäßig angeordnete transparente und opake Bereiche 7, 8, wobei die transparenten Bereiche 7 als Vielecke - im dargestellte Ausführungsbeispiel als Dreiecke - ausgestaltet sind.

Die regelmäßig angeordnete transparenten Bereiche 7 beim Rasterelement 6 gemäß Figur 3d zeichnen sich dadurch aus, dass sie selbst eine unregelmäßige Form aufweisen.

Bei dem Rasterelement 6 gemäß Figur 4 sind die transparenten und opaken Bereiche 7, 8 als parallel verlaufende Linien ausgestaltet, die sich regelmäßig abwechseln.

Bei allen Ausführungsformen gemäß Figuren 3a-d, aber auch gemäß Figur 4 wechseln sich die die transparent und opaken Bereiche 7, 8 des Rasterelementes 6 derart ab, dass benachbarte Bereiche 7, 8 aus einer Entfernung von wenigstens 90 cm von der Außenseite 2 der Fluchtwegmarkierung 1 bei einem Auflösungsvermögen von wenigstens 2,0 Bogenminuten, nicht mehr getrennt wahrgenommen werden können.

## Patentansprüche

1. Fluchtwegmarkierung (1) für Flugzeuge, umfassend ein im Dunkeln nachleuchtendes Leuchtelement (3), dessen abgestrahltes Licht an einer Außenseite (2) der Fluchtwegmarkierung (1) austritt, und ein zwischen dem Leuchtelement (3) und der Außenseite (2) der Fluchtwegmarkierung (1) angeordnetes transparentes Schutzelement (5), wobei zwischen dem Leuchtelement (3) und der Außenseite (2) der Fluchtwegmarkierung (1) ein flächiges Rasterelement (6) vorgesehen ist, welches sich regelmäßig abwechselnde farbrein transparente und opake Bereiche (7, 8) umfasst,
**dadurch gekennzeichnet, dass**
die opaken Bereiche (8) des Rasterelementes (6) derart eingefärbt sind, dass sich bei externer Beleuchtung gemäß dem wenigstens einen vorgegebenen Beleuchtungsszenario auf der Außenseite (2) der Fluchtwegmarkierung (1) an den opaken Bereichen (8) des Rasterelementes (6) ein vorgegebenes mehrfarbiges Muster ergibt, und ein transparentes eingefärbtes Element derart ausgebildet und zwischen Leuchtelement (3) und der Außenseite (2) der Fluchtwegmarkierung (1) angeordnet ist, dass sich bei externer Beleuchtung gemäß wenigstens einem vorgegebenen Beleuchtungsszenario auf der Außenseite (2) der Fluchtwegmarkierung (1) an den transparenten Bereichen (7) des Rasterelementes (6) ein vorgegebener erster Farbton ergibt, wobei der vorgegebene erste Farbton ein Farbton des vorgegebenen mehrfarbigen Musters ist.

2. Fluchtwegmarkierung nach Anspruch 1,
**dadurch gekennzeichnet, dass**
das Schutzelement (5) zur Bildung des transparenten eingefärbten Elements eingefärbt ist oder das transparente eingefärbte Element ein Farbfilm (5') ist.

3. Fluchtwegmarkierung nach einem der vorhergehenden Ansprüche,
**dadurch gekennzeichnet, dass**
das transparente eingefärbte Element derart eingefärbt ist, dass sich bei externer Beleuchtung gemäß dem wenigstens einen vorgegebenen Beleuchtungsszenario auf der Außenseite (2) der Fluchtwegmarkierung (1) an den transparenten Bereichen (7) des Rasterelementes (6) eine vorgegebene Helligkeit und/oder eine vorgegebene Sättigung ergibt, die vorzugsweise derjenigen des vorgegebenen Musters an der hellsten Stelle mit dem vorgegebenen ersten Farbton entspricht.

4. Fluchtwegmarkierung nach einem der vorhergehenden Ansprüche,
**dadurch gekennzeichnet, dass**
sich die transparenten und opaken Bereiche (7, 8) des Rasterelementes (6) derart abwechseln, dass benachbarte Bereiche aus einer Entfernung von wenigstens 90 cm von der Außenseite (2) der Fluchtwegmarkierung (1) bei einem Auflösungsvermögen von wenigstens 2,0 Bogenminuten, vorzugsweise von wenigstens 0,5 Bogenminuten, weiter vorzugsweise von wenigstens 0,3 Bogenminuten nicht mehr getrennt wahrgenommen werden können.

5. Fluchtwegmarkierung nach einem der vorhergehenden Ansprüche,
**dadurch gekennzeichnet, dass**
die opaken Bereiche (8) und/oder die transparenten Bereiche (7) des Rastelementes einen mittleren Durchmesser von 0,25 mm bis 2 mm, vorzugsweise von 0,25 mm bis 1 mm aufweisen und/oder der mittlere Abstand zweier benachbarter opaker Bereiche (8) 0,3 mm bis 4 mm, vorzugsweise 0,3 mm bis 2 mm beträgt.

6. Fluchtwegmarkierung nach einem der vorhergehenden Ansprüche,
**dadurch gekennzeichnet, dass**
das Rasterelement (6) zwischen der Außenseite (2) der Fluchtwegmarkierung (1) und dem Schutzelement (5) angeordnet, vorzugsweise als Druckfarbe(n) in einem Druckverfahren auf das Schutzelement (5) aufgebracht ist, wobei über dem Rasterelement (6) vorzugsweise ein Kratzschutzlack (9) aufgetragen ist.

7. Fluchtwegmarkierung nach Anspruch 6,
**dadurch gekennzeichnet, dass**
die Dicke des Rasterelements (6) kleiner als 100 µm, vorzugsweise zwischen 20 und 30 µm ist und/oder die Dicke der Kratzschutzlackschicht (9) kleiner als 50 µm, vorzugsweise zwischen 5 und 15 µm ist.

8. Fluchtwegmarkierung nach Anspruch 6 oder 7,
**dadurch gekennzeichnet, dass**
die Druckfarbe(n) des Rasterelementes und/oder der Kratzschutzlack UV-aushärtend sind.

9. Fluchtwegmarkierung nach einem der vorhergehenden Ansprüche,
**dadurch gekennzeichnet, dass**
die transparenten Bereiche (7) des Rasterelementes (6) Leerstellen sind.

10. Fluchtwegmarkierung nach einem der vorhergehenden Ansprüche,
**dadurch gekennzeichnet, dass**
der Flächenanteil von opaken Bereichen (8) des Rasterelementes (6) gegenüber dessen Gesamtfläche zwischen 20% und 80% ist.

11. Fluchtwegmarkierung nach einem der vorhergehenden Ansprüche,
die transparenten Bereiche (7) des Rasterelementes (6) als geometrisch regelmäßige Formen ausgestaltet sind.

12. Anordnung (10) aus einer Fluchtwegmarkierung (1) und einem benachbart zur Fluchtwegmarkierung angeordneten gemusterten Bodenbelag (11), wobei die Fluchtwegmarkierung (1) gemäß einem der Ansprüche 1 bis 9 ausgebildet und derart ausgestaltet ist, dass bei externer Beleuchtung der Anordnung (10) gemäß wenigstens einem vorgegebenen Beleuchtungsszenario auf der Außenseite (2) der Fluchtwegmarkierung (1) ein an das Muster des Bodenbelags (11) angepasstes Muster ergibt.

13. Anordnung nach Anspruch 12,
**dadurch gekennzeichnet, dass**
der Bodenbelag (11) ein Teppich, vorzugsweise ein mehrfarbiger Teppich ist.

## Claims

1. Escape path marking (1) for aircraft, comprising a lighting element (3), which luminesces in the dark, and the emitted light of which exits at an outer side (2) of the escape path marking (1), and a transparent protective element (5) arranged between the lighting element (3) and the outer side (2) of the escape path marking (1), wherein a planar grid element (6), which comprises regularly alternating pure-color transparent and opaque regions (7, 8), is arranged between the lighting element (3) and the outer side (2) of the escape path marking (1),
**characterized in that**
the opaque regions (8) of the grid element (6) are pigmented such that in the event of external illumination according to the at least one predefined illumination scenario, a predefined multicoloured pattern is produced on the outer side (2) of the escape path marking (1) at the opaque regions (8) of the grid element (6), and a transparent pigmented element is arranged between the lighting element (3) and the outer side (2) of the escape path marking (1) and designed such that in the event of external illumination according to at least one predefined illumination scenario, a predefined first colour tone is produced on the outer side (2) of the escape path marking (1) at the transparent regions (7) of the grid element (6), wherein the predefined first colour tone is a colour tone of the predefined multicoloured pattern.

2. Escape path marking according to Claim 1,
**characterized in that**
the protective element (5) is pigmented to form the transparent pigmented element or the transparent pigmented element is an ink film (5').

3. Escape path marking according to any one of the preceding claims,
**characterized in that** the transparent pigmented element is pigmented such that in the event of external illumination according to the at least one predefined illumination scenario, a predefined brightness and/or a predefined saturation results on the outer side (2) of the escape path marking (1) at the transparent regions (7) of the grid element (6), which preferably corresponds to that of the predefined pattern at the brightest point having the predefined first color tone.

4. Escape path marking according to any one of the preceding claims,
**characterized in that** the transparent and opaque regions (7, 8) of the grid element (6) alternate such that adjacent regions can no longer be perceived separately from a distance of at least 90 cm from the outer side (2) of the escape path marking (1) at a resolution of at least 2.0 arc minutes, preferably at least 0.5 arc minutes, more preferably at least 0.3 arc minutes.

5. Escape path marking according to any one of the preceding claims,
**characterized in that** the opaque regions (8) and/or the transparent regions (7) of the grid element have a mean diameter of 0.25 mm to 2 mm, preferably 0.25 mm to 1 mm and/or the mean distance between two adjacent opaque regions (8) is 0.3 mm to 4 mm, preferably 0.3 mm to 2 mm.

6. Escape path marking according to any one of the preceding claims,
**characterized in that** the grid element (6) is arranged between the outer side (2) of the escape path marking (1) and the protective element (5), preferably is applied as printing ink(s) in a printing method to the protective element (5), wherein a scratch protection lacquer (9) is preferably applied over the grid element (6).

7. Escape path marking according to Claim 6,
**characterized in that** the thickness of the grid element (6) is less than 100 µm, preferably between 20 and 30 µm, and/or the thickness of the scratch protection lacquer layer (9) is less than 50 µm, preferably between 5 and 15 µm.

8. Escape path marking according to Claim 6 or 7,
**characterized in that** the printing ink(s) of the grid element and/or the scratch protection lacquer are UV-curing.

9. Escape path marking according to one of the preceding claims,
**characterized in that**
the transparent regions (7) of the grid element (6) are empty spaces.

10. Escape path marking according to one of the preceding claims,
**characterized in that**
the surface area taken up by opaque regions (8) of the grid element (6) is between 20% and 80% of the total surface area.

11. Escape path marking according to one of the preceding claims,
the transparent regions (7) of the grid element (6) having geometrically regular shapes.

12. Arrangement (10) of an escape path marking (1) and a patterned floor covering (11) arranged adjacent to the escape path marking, wherein the escape path marking (1) is embodied according to any one of Claims 1 to 9 and is designed such that in the event of external illumination of the arrangement (10) according to at least one predefined illumination scenario, a pattern adapted to the pattern of the floor covering (11) results on the outer side (2) of the escape path marking (1).

13. Arrangement according to Claim 12,
**characterized in that** the floor covering (11) is a carpet, preferably a multicolored carpet.

## Revendications

1. Dispositif de marquage de voie d'évacuation (1) destiné à des aéronefs, ledit dispositif comprenant un élément d'éclairage (3) dont la lumière émise sort d'un côté extérieur (2) du dispositif de marquage de voie d'évacuation (1), et un élément de protection transparent {5) disposé entre l'élément d'éclairage (3) et le côté extérieur (2) du dispositif de marquage de voie d'évacuation (1), un élément de trame (6) sensiblement bidimensionnel étant prévu entre l'élément d'éclairage (3) et le côté extérieur (2) du dispositif de marquage de voie d'évacuation (1), lequel élément de trame comprend une alternance régulière de zones transparentes et opaques de couleur pure {7, 8),
**caractérisé en ce que**
les zones opaques (8) de l'élément de trame (6) sont colorées de telle sorte que, lors d'un éclairage externe selon ledit au moins un scénario d'éclairage prédéfini, un motif multicolore prédéfini apparaît sur le côté extérieur (2) du dispositif de marquage de voie d'évacuation (1) au niveau des zones opaques (8) de l'élément de trame (6), et un élément coloré transparent est formé et agencé entre l'élément d'éclairage (3) et le côté extérieur (2) du dispositif de marquage de voie d'évacuation (1) de telle sorte que, lors d'un éclairage externe selon au moins un scénario d'éclairage prédéfini, une première teinte prédéfinie apparaît sur le côté extérieur (2) du dispositif de marquage de voie d'évacuation (1) au niveau des zones transparentes (7) de l'élément de trame (6), la première teinte prédéfinie étant une teinte du motif multicolore prédéfini.

2. Dispositif de marquage de voie d'évacuation selon la revendication 1,
**caractérisé en ce que**
l'élément de protection (5) est coloré de façon à former l'élément coloré transparent, ou l'élément coloré transparent est un film coloré (5').

3. Dispositif de marquage de voie d'évacuation selon l'une des revendications précédentes,
**caractérisé en ce que**
l'élément coloré transparent est coloré de façon à obtenir, dans le cas d'un éclairage extérieur selon au moins un scénario d'éclairage prédéterminé, une luminosité prédéterminée et/ou une saturation prédéterminée, qui correspondent de préférence à celles du motif prédéterminé à l'endroit le plus lumineux avec la première couleur prédéterminée, au niveau des zones transparentes (7) de l'élément de trame (6) du côté extérieur (2) du dispositif de marquage de voie d'évacuation (1).

4. Dispositif de marquage de voie d'évacuation selon l'une des revendications précédentes,
**caractérisé en ce que**
les zones transparentes et opaques (7, 8) de l'élément de trame (6) alternent de façon à ne plus percevoir séparément des zones adjacentes à une distance d'au moins 90 cm du côté extérieur (2) du dispositif de marquage de voie d'évacuation (1) avec un pouvoir de résolution d'au moins 2,0 minutes d'arc, de préférence d'au moins 0,5 minute d'arc, plus préférablement d'au moins 0,3 minute d'arc.

5. Dispositif de marquage de voie d'évacuation selon l'une des revendications précédentes,
**caractérisé en ce que**
les zones opaques (8) et/ou les zones transparentes (7) de l'élément de trame ont un diamètre moyen de 0,25 mm à 2 mm, de préférence de 0,25 mm à 1 mm et/ou la distance moyenne entre deux zones opaques adjacentes (8) est de 0,3 mm à 4 mm, de préférence 0,3 mm à 2 mm.

6. Dispositif de marquage de voie d'évacuation selon l'une des revendications précédentes,
**caractérisé en ce que**
l'élément de trame (6) est disposé entre le côté extérieur (2) du dispositif de marquage de voie d'évacuation (1) et l'élément de protection (5), de préférence est appliqué sous la forme d'au moins une encre d'impression dans un processus d'impression sur l'élément de protection (5), un vernis anti-rayures (9) étant de préférence appliqué sur l'élément de trame (6).

7. Dispositif de marquage de voie d'évacuation selon la revendication 6,
**caractérisé en ce que**
l'épaisseur de l'élément de trame (6) est inférieure à 100 µm, de préférence comprise entre 20 et 30 µm et/ou l'épaisseur de la couche de vernis anti-rayures (9) est inférieure à 50 µm, de préférence comprise entre 5 et 15 µm.

8. Dispositif de marquage de voie d'évacuation selon la revendication 6 ou 7,
**caractérisé en ce que**
l'au moins une encre d'impression de l'élément de trame et/ou le vernis anti-rayures sont durcissables aux UV.

9. Dispositif de marquage de voie d'évacuation selon l'une des revendications précédentes,
**caractérisé en ce que**
les zones transparentes (7) de l'élément de trame (6) sont des espaces vides.

10. Dispositif de marquage de voie d'évacuation selon l'une des revendications précédentes,
**caractérisé en ce que**
la proportion de surface des zones opaques (8) de l'élément de trame (6) par rapport à sa surface totale est comprise entre 20% et 80%.

11. Dispositif de marquage de voie d'évacuation selon l'une des revendications précédentes,
les zones transparentes (7) de l'élément de trame (6) étant conçues sous forme de figures géométriques régulières.

12. Ensemble (10) d'un dispositif de marquage de voie d'évacuation (1) et d'un revêtement de sol à motifs (11) disposé de manière adjacente au dispositif de marquage de voie d'évacuation,
le dispositif de marquage de voie d'évacuation (1) étant conçu selon l'une des revendications 1 à 9 et configuré de façon à obtenir, en cas d'éclairage extérieur de l'ensemble (10) selon au moins un scénario d'éclairage prédéterminé, un motif adapté au motif du revêtement de sol (11) du côté extérieur (2) du dispositif de marquage de voie d'évacuation (1).

13. Ensemble selon la revendication 12,
**caractérisé en ce que**
le revêtement de sol (11) est un tapis, de préférence un tapis multicolore.
